**Europäisches Patentamt**

**European Patent Office**

**Office européen des brevets**

(19)

(11) **EP 0 811 825 A2**

(12) **EUROPÄISCHE PATENTANMELDUNG**

(43) Veröffentlichungstag:
10.12.1997 Patentblatt 1997/50

(51) Int. Cl.$^6$: **G01B 7/34**

(21) Anmeldenummer: 97108774.7

(22) Anmeldetag: 02.06.1997

(84) Benannte Vertragsstaaten:
AT BE CH DE DK ES FI FR GB GR IE IT LI LU MC NL PT SE

(30) Priorität: 04.06.1996 DE 19622429

(71) Anmelder:
**WAGNER INTERNATIONAL AG**
**9450 Altstätten (CH)**

(72) Erfinder: **Adams, Horst, Dr.**
**88149 Nonnenhorn (DE)**

(74) Vertreter: **Liesegang, Eva et al**
**Forrester & Boehmert,**
**Franz-Josef-Strasse 38**
**80801 München (DE)**

(54) **Verfahren und Vorrichtung zum Bestimmen der Beschaffenheit einer Werkstückoberfläche**

(57)   Die Erfindung schlägt ein Verfahren zum Bestimmen der Beschaffenheit einer Werkstückoberfläche vor, mit folgenden Verfahrensschritten: Messen eines Rauhigkeitsprofils der Oberfläche über eine bestimmte Meßstrecke, Zerlegen des Rauhigkeitsprofils in Wellenfrequenzen und zugehörige Amplituden, Einteilen der Wellenfrequenzen in Wellenfrequenzenbereiche und Bestimmen der Beschaffenheit der Werkstückoberfläche aufgrund der Amplituden in den jeweiligen Wellenfrequenzbereichen. Das Rauhigkeitsprofil kann als eine Überlagerung von harmonischen Schwingungen mit bestimmten Wellenlängen und Amplituden betrachtet werden. Durch Fourier-Analyse werden diese harmonischen Schwingungen in ihre Wellenfrequenzen und zugehörigen Amplituden zerlegt. Die Wellenfrequenzbereiche werden derart zu Bändern zusammengefaßt, daß eine hohe Intensität in einem der Bänder jeweils einer bestimmten Erscheinungsform der Oberfläche entspricht. Somit wird ein objektives, berechenbares Maß für die Oberflächenbeschaffenheit eines Werkstückes geschaffen.

Fig.4

**Beschreibung**

Die vorliegende Erfindung betrifft ein Verfahren und eine Vorrichtung zum Bestimmen der Oberflächenbeschaffenheit eines Werkstückes.

Für die Bestimmung der Güte oder allgemein der Beschaffenheit einer lackierten Werkstückoberfläche gab es bisher keine objektiven Kriterien. Lackierte Oberflächen wurden lediglich optisch von entsprechend geschultem Personal geprüft und hinsichtlich solcher Effekte, wie "Orangenhaut", "Wolkigkeit" oder "Unruhigkeit" der Lackierung, subjektiv und somit ungenau charakterisiert, wie schon die "blumige" Bezeichnungsweise zum Ausdruck bringt.

Diese Art der Oberflächenprüfung ist unzuverlässig, weil sie stark von dem persönlichen Empfinden sowie von der Erfahrung der prüfenden Person abhängt, und mangels objektiver Kriterien ist ihr Ergebnis niemals eindeutig.

Aus dem Katalog 94/08 der Firma BYK-Gardner GmbH, Geretsried, DE, und DE-A 41 27 215 ist ein Gerät zum Messen des "Orangenhauteffekts" oder der Verlaufsstörung von Oberflächen bekannt, welches die visuelle Betrachtung solcher Oberflächen nachbildet. Wie mit dem Auge wird das wellige Helligkeitsmuster auf der Oberfläche optisch abgetastet, wobei ein Meßgerät einen Lichtstrahl auf die Oberfläche sendet und die Reflektion mißt.

Das resultierende Helligkeitsprofil wird in langwellige und kurzwellige Anteile aufgeteilt, wobei die Lang- und Kurzwelligkeit als ein indirektes Maß zur Analyse der Oberfläche dient. Über die weitere Auswertung des Meßsignals ist in dem Katalog nichts ausgesagt. Ein Nachteil des beschriebenen Verfahrens ist, daß die Messung per Reflektion von Licht erfolgt und somit nur auf reflektierenden Oberflächen eingesetzt werden kann. Matte Oberflächen sind nicht charakterisierbar.

DE-A-41 30 068 beschreibt eine optische Reflexionsmeßvorrichtung, welche die Intensität eines von einer Oberfläche reflektierten Lichtes erfaßt und das Ortsfrequenzspektrum der reflektierten Intensitäten berechnet. Durch Vergleich des Ortsfrequenzspektrums bzw. aussagekräftiger Bereiche des Ortsfrequenzspektrums mit einem Sollwert wird die Oberflächenrauhigkeit eines Werkstückes überprüft. Eine Bestimmung des optischen Erscheinungsbildes einer Oberfläche hinsichtlich der oben beschriebenen Effekte ist mit dem in dieser Druckschrift beschriebenen Verfahren nicht möglich.

Es ist eine Aufgabe der vorliegenden Erfindung, ein Verfahren und eine Vorrichtung zum Bestimmen der Beschaffenheit einer Werkstückoberfläche anzugeben, mit denen diese objektiv geprüft und das Prüfungsergebnis quantifiziert werden kann.

Diese Aufgabe wird erfindungsgemäß durch ein Verfahren mit den Merkmalen von Anspruch 1 bzw. durch eine Vorrichtung mit den Merkmalen von Anspruch 9 gelöst.

Das erfindungsgemäße Verfahren umfaßt im wesentlichen die folgenden Verfahrensschritte: Ein Rauhigkeitsprofil der Oberfläche des Werkstückes wird über einer bestimmten Meßstrecke erstellt, indem die Werkstückoberfläche z.B. auf an sich bekannte Weise mit einem Tastkopf abgefühlt wird. Das so aufgenommene Rauhigkeitsprofil wird dann digitalisiert. Alternativ kann auch von vornherein eine diskrete Meßreihe aus Wellenhöhen-Werten des Oberflächenprofils aufgenommen werden.

Danach wird das Rauhigkeitsprofil in harmonische Schwingungen mit bestimmten Wellenlängen und zugehörigen Amplituden zerlegt. Das Rauhigkeitsprofil kann als eine Überlagerung von harmonischen Schwingungen mit bestimmten Wellenlängen und Amplituden betrachtet werden. Durch die Fourier-Analyse werden diese harmonischen Schwingungen in ihre den Wellenlängen entsprechenden Wellenfrequenzen, oder (ungebräuchlicher) Wellenzahlen, und zugehörigen Amplituden zerlegt.

Der Begriff "Wellenfrequenz" bezeichnet hier keine zeitliche Größe des Oberflächenprofils, sondern eine räumliche, nämlich die Wellenzahl pro Längeneinheit der Meßstrecke. Die Einheit der Größe "Wellenfrequenz" ist für die Zwecke dieser Anmeldung somit 1/mm, d.h. 1 Schwingung oder Welle pro mm. Man beachte, daß die Wellenlänge $\lambda$ und die Wellenfrequenz $\nu$ einer Schwingung die folgende Beziehung haben: $\lambda \cdot \nu = konstant$, so daß leicht eine Umrechnung von Wellenlängen in Wellenfrequenzen und umgekehrt erfolgen kann. Die folgende Beschreibung und die Ansprüche beziehen sich auf die Berechnung und Verarbeitung von Wellenfrequenzen; im Ergebnis dieselbe Charakterisierung der Oberflächenbeschaffenheit des Werkstücks erhält man jedoch auch bei Zerlegung der Meßkurve des Rauhigkeitsprofils in entsprechende Wellenlängen und zugehörige Amplituden.

Vorzugsweise wird das gemessene Rauhigkeitsprofil mittels einer Fourier-Analyse in die Wellenfrequenzen und die zugehörigen Amplituden zerlegt. Die Fourierkoeffizienten können z.B. mittels der schnellen Fouriertransformation berechnet werden.

Die Wellenfrequenzen oder Wellenlängen werden dann in Wellenfrequenzbereiche oder Wellenlängenbereiche oder -bänder aufgeteilt, und die Beschaffenheit der Werkstückoberfläche wird als Funktion der Amplituden in den jeweiligen Wellenfrequenzbereichen oder Wellenlängenbereichen, bestimmt. Hierfür kann für jeden Wellenfrequenzbereich oder Wellenlängenbereich ein Amplitudenmittelwert gebildet werden.

Die Einteilung in Wellenfrequenzbänder bzw. Wellenlängenbänder ist zunächst willkürlich. Sie sollte jedoch so gewählt werden, daß eine hohe Intensität (oder mittlere Amplitude) in einem der Bänder jeweils einer bestimmten Erscheinungsform der Oberfläche entspricht. Somit liefert das erfindungsgemäße Verfahren eine eindeutige und objektiv ermittelbare Größe als ein Maß für die Beurteilung der Oberflächenbeschaffenheit.

Die Einteilung der Wellenfrequenzbereiche Wellenlängenbereiche und die Zuordnung zu den subjektiven Eindrükken der Oberflächenbeschaffenheit erfolgt in der Praxis empirisch, wobei letztendlich eine Normierung der Wellenfrequenzbereiche bzw. Wellenlängenbereiche und Intensitätswerte vorgesehen werden sollte, um einen allgemein verbindlichen Maßstab zu erhalten.

Die Erfindung sieht ferner eine Vorrichtung zum Bestimmen der Beschaffenheit einer Werkstückoberfläche vor, mit einem Rauhigkeitsmeßgerät zum Aufnehmen eines Rauhigkeitsprofils der Oberfläche über einer bestimmten Meßstrecke, einer Recheneinrichtung zum Ableiten von Wellenfrequenzen bzw. Wellenlängen und zugehörigen Amplituden aus dem gemessenen Rauhigkeitsprofil und einer Zuordnungseinrichtung zum Einteilen der Wellenfrequenzen bzw. Wellenlängen in Wellenfrequenzbereiche bzw. ind Wellenlängenbereiche und zum Bestimmen der Beschaffenheit der Werkstückoberfläche aufgrund der Amplituden in den jeweiligen Wellenfrequenzbereichen bzw. Wellenlängenbereiche. Das Rauhigkeitsmeßgerät weist vorzugsweise eine Sensoreinrichtung auf, mit der eine kontinuierliche Meßkurve des Rauhigkeitsprofils aufgenommen wird, sowie einen Analog-Digital-Wandler, der die kontinuierliche Meßkurve in diskrete digitale Meßwerte umwandelt. Die Sensoreinrichtung arbeitet z.B. mit einer aus der Oberflächenprüfung bekannten Tastspitze.

Besonders vorteilhaft ist die Berechnung der den Wellenlängen entsprechenden Wellenfrequenzen und der zugehörigen Amplituden mittels einer Fourier-Analyse des Rauhigkeitsprofils.

Das erfindungsgemäße Verfahren und die Vorrichtung sind besonders geeignet für lackierte Werkstückoberflächen, die sich wiederholende wellenartige Unregelmäßigkeiten in der Lackierung aufweisen. Sie können jedoch auch zur Prüfung anders beschichteter oder z.B. durch Fräsen oder Feilen etc. bearbeiteter Werkstücke eingesetzt werden.

Die Erfindung ist im folgenden anhand einer bevorzugten Ausführungsform mit Bezug auf die Zeichnung näher erläutert. In den Figuren zeigen:

Fig. 1    einen Graphen eines Rauhigkeitsprofils einer Werkstückoberfläche,

Fig. 2    eine Graphik des Ergebnisses der Fourier-Analyse des Rauhigkeitsprofils von Fig. 1,

Fig. 3    eine Darstellung von Wellenfrequenzbändern ausgehend von dem Fourier-Analyseergebnis von Fig. 2, und

Fig. 4    ein schematische Blockdiagramm der erfindungsgemäßen Vorrichtung.

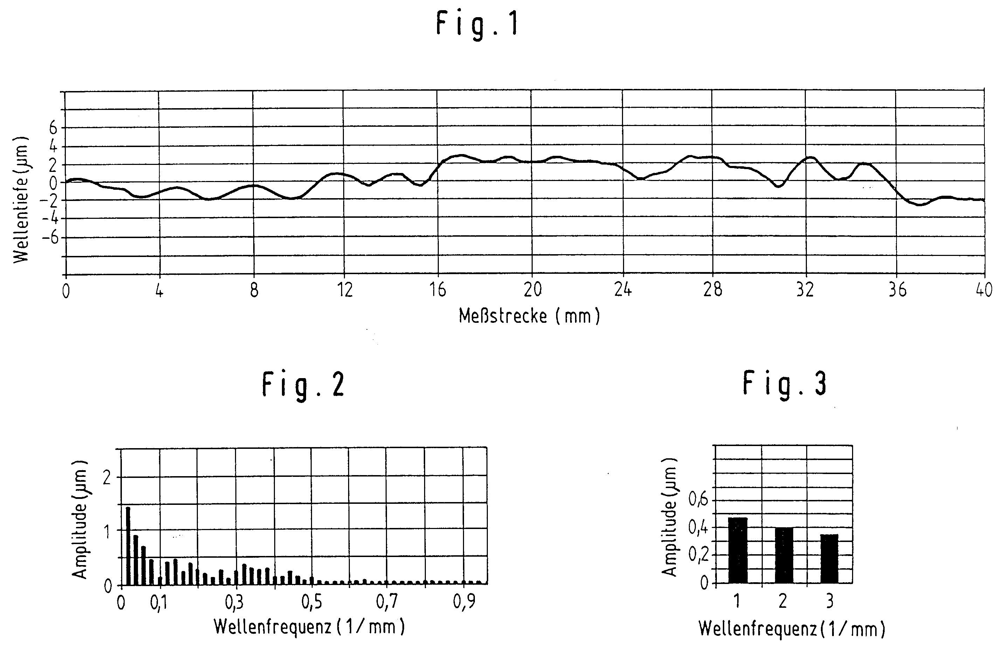

Figur 1 zeigt das kontinuierliche Rauhigkeitsprofil einer lackierten Oberfläche über einer Meßstrecke von 40 mm. Die Wellentiefe beträgt zwischen -3 μm und +3 μm, wobei die Nullinie einer vollständig glatten Oberfläche bei der gewünschten Höhe entspricht. Für das Erstellen des Rauhigkeitsprofils kann ein im Prinzip beliebiges Rauhigkeitsmeßgerät, z. B. eine Tastspitze, verwendet werden. Eine Tastspitze wird über die Oberfläche des Werkstücks geführt, um diese abzufühlen und das Rauhigkeitsprofil aufzunehmen. Alternativ könnten z. B. auch eine optische oder eine Ultraschall-Einrichtung eingesetzt werden, um die Oberfläche des Werkstücks abzutasten.

Die in Figur 1 dargestellte Meßkurve wird für die weitere Verarbeitung digitalisiert, also in einzelne diskrete Meßpunkte zerlegt. Alternativ kann das Rauhigkeitsprofil auch von Anfang an in Form diskreter Meßpunkte aufgenommen werden. Die diskreten Meßwerte der Wellentiefe über der Meßstrecke werden einer Fourier-Analyse unterzogen, um eine Fourierreihe des Rauhigkeitsprofils zu bilden.

Das Ergebnis dieser Analyse ist in Figur 2 gezeigt, die Intensitäts- oder Amplitudenwerte für bestimmte Wellenfrequenzen wiedergibt.

Bei der Fourier-Analyse wird das Rauhigkeitsprofil behandelt wie eine periodische Zeitfunktion, wobei sich das Oberflächenprofil des Werkstückes jedoch nicht über der Zeit, sondern über der Meßstrecke ändert, so daß die Einheit der Wellenfrequenz im Zusammenhang dieser Anmeldung nicht 1/s, sondern 1/mm ist. Gleichwohl gelten für die vorliegende Erfindung dieselben Gesetzmäßigkeiten und Regeln für die Fourier-Analyse wie bei der Fourier-Analyse einer Zeitfunktion, welche für sich genommen dem Fachmann bekannt ist. Da im vorliegenden Fall die Fourier-Analyse nicht aufgrund einer kontinuierlichen Kurve sondern auf der Basis eines diskreten Systems von Punkten durchgeführt wird, spricht man von einer numerischen harmonischen Analyse. Die Fourierkoeffizienten, welche den Amplituden- bzw. Intensitätswerten entsprechen, werden vorzugsweise mit der schnellen Fouriertransformation (FFT) berechnet.

Figur 2 zeigt Intensitätswerte oder Amplituden der Oberflächenwellen für bestimmte Wellenfrequenzen, welche durch die Fourier-Analyse erhalten werden. In Figur 3 sind Wellenfrequenzbereiche oder Wellenfrequenzbänder dargestellt, die bestimmten Eindrücken von der Werkstückoberfläche zugeordnet werden können. Für jedes Wellenfrequenzband wird der Mittelwert der darin enthaltenen Amplituden berechnet. Durch eine Zuordnung der Wellenfrequenzbereiche, und somit, wie oben erläutert, der entsprechenden Wellenlängenbereiche, zu den korrespondierenden subjektiven Eindrücken läßt sich mit der vorliegenden Erfindung eine Oberfläche zahlenmäßig hinsichtlich ihrer optischen Erscheinung charakterisieren. Momentan sind z. B. drei Wellenfrequenzbänder mit folgender Bedeutung vorgesehen:

|  | Wellenlänge [mm] | Wellenfrequenz [1/mm] | Bedeutung |
|---|---|---|---|
| Band 1 | 0,2 - 2 | 0,5 k - 5 k | Orangenhaut |
| Band 2 | 2 - 100 | 0,1 k - 0,5 k | unruhige Oberfläche |
| Band 3 | > 100 | < 0,1 k | Wolkigkeit |

wobei k eine Konstante ist. Man beachte, daß diese Einteilung lediglich der Erläuterung der Erfindung dient und in keiner Weise bindend ist.

Für jede Oberfläche kann ein Kennzeichnungsvektor gebildet werden, dessen Elemente den normierten Amplituden in den jeweiligen Wellenfrequenzbändern entsprechen. Demnach hätte eine absolut glatte Oberfläche die Darstellung (0,0,0). Wenn man annimmt, daß eine (normierte) maximale Amplitude 10 ist, dann hätte eine Oberfläche, die stark einer Orangenhaut ähnelt, z. B. die Darstellung (10,0,0), und eine Oberfläche, die nur wenig einer Orangenhaut ähnelt, einen relativ ruhigen Verlauf, aber eine starke großflächige Wolkigkeit hat, hätte die Darstellung (2,2,10).

Diese Einteilung in Wellenfrequenzbänder und die Bewertung aufgrund der (mittleren) Amplituden in den jeweiligen Bändern kann von jedem Fachmann auf diesem Gebiet aufgrund seiner Erfahrung nach Durchführung einer relativ kleinen Anzahl von Testmessungen vorgenommen werden. Letztendlich ist jedoch eine Normierung der Wellenlängenbänder angestrebt, um eine verbindliche Aussage über die Oberflächenbeschaffenheit treffen zu können.

Wesentliches Merkmal der vorliegenden Erfindung ist also nicht die konkrete Zuordnung von Wellenfrequenzbereichen zu Oberflächenbeschaffenheiten, sondern die Lehre, die Rauhigkeitsmeßwerte durch Fourier-Analyse in Wellenfrequenzen und zugeordnete Amplitudenwerte zu zerlegen und die Wellenfrequenzen anschließend in Wellenfrequenzbänder oder -bereiche aufzuteilen, welche eine zahlenmäßige (quantifizierte) Charakterisierung der optischen Eigenschaften der Oberfläche ermöglichen.

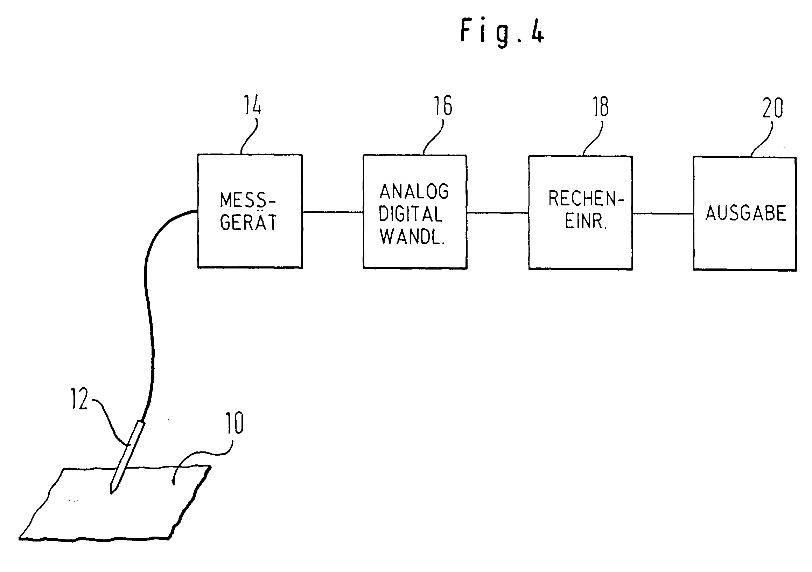

Figur 4 zeigt schematisch eine Vorrichtung zum Bestimmen der Beschaffenheit einer Werkstückoberfläche 10. Eine Tastspitze 12 wird über die Oberfläche 10 geführt und überträgt der Welligkeit der Oberfläche 10 entsprechende elektrische Signale an ein Meßgerät 14, welches daraus eine Meßkurve, wie die in Figur 1 gezeigte, ableitet. Die Meßkurve der Oberflächenrauhigkeit oder -welligkeit wird in einem Analog-Digital-Wandler 16 in einzelne, diskrete Meßpunkte zerlegt und an eine Recheneinrichtung 18 übergeben. Die Recheneinrichtung 18 führt eine Fourier-Analyse der Meßwerte durch, d. h. eine Zerlegung des Rauhigkeitsprofils in eine Reihe von harmonischen Schwingungen mit bestimmten Wellenfrequenzen und Amplituden. In der Recheneinrichtung 18 werden die einzelnen Glieder der Fourierreihe ferner zu Wellenfrequenzbändern zusammengefaßt, wobei jedes Wellenfrequenzband eine Amplitude hat, die der mittleren Amplitude der einzelnen, in dem Band enthaltenen Wellenfrequenzen entspricht. Das Ergebnis dieser Verarbeitung, also die in Wellenfrequenzbändern zusammengefaßten Amplituden oder Fourierkoeffizienten, können dann über eine Ausgabeeinrichtung 20 angezeigt oder zur weiteren Verarbeitung an eine nachfolgende Verarbeitungseinrichtung (nicht gezeigt) weitergeleitet werden.

Die Erfindung kann hinsichtlich der Erfassung des Rauhigkeitsprofils, der konkreten Realisierung der Fourier-Analyse, der Einteilung in Wellenfrequenzbereiche, der Normierung dieser Wellenfrequenzbereiche sowie der zugeordneten Amplituden, der Ausgabe und Weiterverarbeitung des Ergebnisses der Fourier-Analyse auf viele für den Fachmann ersichtliche Weisen modifiziert und weiterentwickelt werden. Für die Bestimmung der Oberflächenbeschaffenheit kann eine Einteilung in Wellenfrequenzbereiche oder - gleichwertig - in Wellenlängenbereiche vorgesehen werden, da die Wellenfrequenz $\lambda$ und die Wellenlänge $\nu$ sich entsprechende Größen sind, für welche die Beziehung $\lambda \cdot \nu$ = konstant gilt.

Um eine noch bessere Charakterisierung der Oberflächenbeschaffenheit zu erhalten, können mehrere Meßstrecken parallel und/oder orthogonal zueinander über die Werkstückoberfläche gelegt werden.

Die in der vorstehenden Beschreibung, den Figuren und den Ansprüchen definierten Merkmale können sowohl einzeln als auch in beliebiger Kombination für die Verwirklichung der Erfindung wesentlich sein.

**Patentansprüche**

1. Verfahren zum Bestimmen der Beschaffenheit einer Werkstückoberfläche, mit folgenden Verfahrensschritten:

   a. Messen eines Rauhigkeitsprofils der Oberfläche über eine bestimmte Meßstrecke,
   b. Zerlegen des Rauhigkeitsprofils in Wellenlängen und zugehörige Amplituden,
   c. Einteilen der Wellenlängen in Wellenlängenbereiche, und
   d. Bestimmen der Beschaffenheit der Werkstückoberfläche aufgrund der Amplitudenmittelwerte in den jeweiligen Wellenlängenbereichen.

**2.** Verfahren nach Anspruch 1, dadurch **gekennzeichnet,** daß beim Messen des Rauhigkeitsprofils eine kontinuierliche Meßkurve des Rauhigkeitsprofils aufgenommen wird und die Meßkurve danach zur Bildung diskreter Meßwerte digitalisiert wird.

**3.** Verfahren nach Anspruch 1, dadurch **gekennzeichnet,** daß beim Messen des Rauhigkeitsprofils diskrete Meßwerte des Rauhigkeitsprofils aufgenommen werden.

**4.** Verfahren nach einem der vorangehenden Ansprüche, dadurch **gekennzeichnet,** daß das gemessene Rauhigkeitsprofil mittels einer Fourier-Analyse in den Wellenlängen entsprechende Wellenfrequenzen und zugehörige Amplituden zerlegt wird.

**5.** Verfahren nach Anspruch 4, dadurch **gekennzeichnet,** daß die Fourierkoeffizienten mittels der schnellen Fouriertransformation berechnet werden.

**6.** Verfahren nach einem der vorangehenden Ansprüche, dadurch **gekennzeichnet,** daß für die Meßstrecke ein Vektor gebildet wird, dessen Komponenten jeweils den Amplitudenmittelwerten der Wellenlängenbereiche entsprechen.

**7.** Verfahren nach einem der vorangehenden Ansprüche, dadurch **gekennzeichnet,** daß die Amplitudenmittelwerte normiert werden.

**8.** Verfahren nach einem der vorangehenden Ansprüche, dadurch **gekennzeichnet,** daß anstelle der Wellenlängen und Wellenlängenbereiche Wellenfrequenzen und Wellenfrequenzbereiche verwendet werden.

**9.** Vorrichtung zum Bestimmen der Beschaffenheit einer Werkstückoberfläche (10), mit

a. einem Rauhigkeitsmeßgerät (12, 14) zum Aufnehmen eines Rauhigkeitsprofils der Oberfläche über eine bestimmte Meßstrecke,
b. einer Recheneinrichtung (18) zum Ableiten von Wellenlängen und zugehörigen Amplituden aus dem gemessenen Rauhigkeitsprofil und
c. einer Zuordnungseinrichtung (18) zum Einteilen der Wellenlängen in Wellenlängenbereiche und zum Bestimmen der Beschaffenheit der Werkstückoberfläche aufgrund der Amplitudenmittelwerte in den jeweiligen Wellenlängenbereichen.

**10.** Vorrichtung nach Anspruch 9, dadurch **gekennzeichnet,** daß das Rauhigkeitsmeßgerät eine Sensoreinrichtung (12) aufweist, mit der eine kontinuierliche Meßkurve des Rauhigkeitsprofils aufnehmbar ist, sowie einen Analog-Digital-Wandler (16), der die kontinuierliche Meßkurve in diskrete Meßwerte umwandelt.

**11.** Vorrichtung nach Anspruch 10, dadurch **gekennzeichnet,** daß die Sensoreinrichtung eine Tastspitze (12) aufweist.

**12.** Vorrichtung nach Anspruch 9, 10 oder 11, dadurch **gekennzeichnet,** daß die Recheneinrichtung (18) die den Wellenlängen entsprechenden Wellenfrequenzen und die zugehörigen Amplituden mittels einer Fourier-Analyse des Rauhigkeitsprofils berechnet.

# Fig.1

Fig.1 — Wellentiefe (µm) vs Meßstrecke (mm)

# Fig.2

Fig.2 — Amplitude (µm) vs Wellenfrequenz (1/mm)

# Fig.3

Fig.3 — Amplitude (µm) vs Wellenfrequenz (1/mm)

EP 0 811 825 A2

Fig.4